# EUROPEAN PATENT APPLICATION

(11) **EP 1 693 342 A2**
(43) Date of publication of application: **23.08.2006**
(21) Application number: 06250824.7
(22) Date of filing: 16.02.2006
(51) Int. Cl.: C01B 31/02, H01J 9/02

(54) **Carbon nanotube structure and method of manufacturing the same, field emission device using the carbon nanotube structure and method of manufacturing the field emission device**

(30) Priority: 19.02.2005 KR 20050013901
(71) Applicant: Samsung SDI Co., Ltd., Suwon-si Gyeonggi-do (KR)
(72) Inventor: Han, In-taek, Seoul (KR); Kim, Ha-jin, Suwon-si Gyeonggi-do (KR)
(74) Representative: Greene, Simon Kenneth

(57) **Abstract**

A CNT structure and a method of manufacturing the CNT structure, and a FED device using the CNT structure and a method of manufacturing the FED device are provided. The CNT structure includes a substrate, a plurality of buffer particles having a predetermined size coated on the substrate, a plurality of catalyst layers formed on surfaces of the buffer particles by annealing a catalyst material deposited on the substrate to a predetermined thickness to cover the buffer particles, and a plurality of CNTs grown from the catalyst layers.

## Description

### BACKGROUND OF THE INVENTION

The present invention relates to a carbon nanotube structure and a method of manufacturing the same and a field emission display device using the carbon nanotube structure and a method of manufacturing the field emission device.

Carbon nanotubes (CNTs) are used in many devices such as field emission display (FED) devices, back light devices for liquid crystal display devices, nano-electronic devices, actuators, and batteries due to their unique structure and electrical characteristics.

A FED device is a display device that generates light by the collision of electrons emitted from an emitter formed on a cathode electrode with a fluorescent layer formed on an anode electrode. A CNT emitter having a superior electron emission characteristic is mainly used as the emitter of the FED device. The FED device can be manufactured in a simple process and has advantages of low costs, low driving voltage, and high chemical and mechanical stability.

A conventional method of forming CNTs includes a screen printing method that uses a paste and a chemical vapor deposition (CVD) method. The CVD method includes a plasma enhanced chemical vapor deposition (PECVD) and a thermal chemical vapor deposition (thermal CVD). The CVD method enables the manufacturing of a high resolution display device and is a simple manufacturing process since the CNTs are directly grown on a substrate. Also, the CVD method provides high purity and well aligned CNTs without an additional surface treatment.

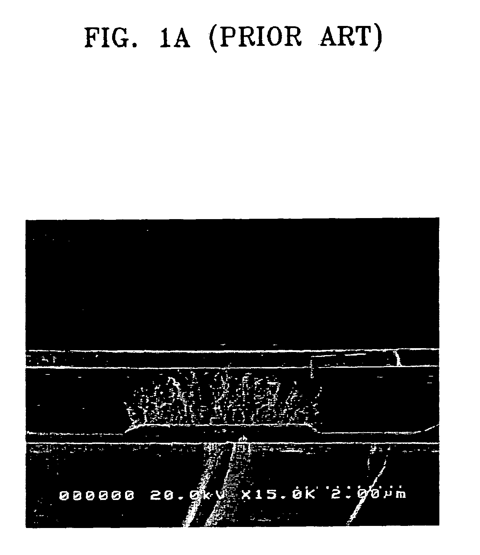

However, when CNTs are grown by the CVD method, as depicted in FIG. 1, high density CNTs can be obtained. When the density of the CNTs is too high, not only the CNTs shield an electric field but also increase driving voltages. On the contrary, when the density of the CNTs is too low, the lifetime of the FED device is reduced since a high current flow through each CNT. Therefore, the optimization of the density of CNTs is needed to reduce a driving voltage and increase the lifetime of the FED device.

A method of growing CNTs from catalyst nano-particles by the CVD method after forming particles composed of Al₂O₃ and the catalyst nano-particles by annealing a substrate on which an Al supporting layer and a Ni catalyst film are deposited to a predetermined thickness has been disclosed in U.S. Patent No. 6,764,874. Here, the density of the CNTs is controlled by the thickness of the Al supporting layer and the Ni catalyst film. That is, when the thickness of the Al supporting layer increases, the density of the CNTs increases, and the thickness of the Ni catalyst film increases, the density of the CNTs decreases. However, this method has a drawback of reducing the catalyst characteristics of the Ni catalyst film due to oxidation of Ni since this method accompanies an annealing process under an air atmosphere. Therefore, an additional reduction process for preventing the reduction of the catalyst characteristics of the Ni catalyst film is required.

### SUMMARY OF THE INVENTION

The present invention also provides a CNT structure comprising: a substrate; a plurality of buffer particles having a predetermined size coated on the substrate; a plurality of catalyst layers formed on surfaces of the buffer particles by annealing a catalyst material deposited on the substrate to a predetermined thickness to cover the buffer particles; and a plurality of CNTs grown from the catalyst layers.

The buffer particles may have a size more than five times greater than the thickness of the catalyst material. The buffer particles can have a size in a range of 1-100 nm, and preferably 5-25 nm.

The buffer particles can be formed of oxide of at least one selected from the group consisting of Si, Al, Ti, TiN, Cr, Ni, and Cu and the catalyst material can be formed of at least a material selected from the group consisting of Ni, Fe, Co, Pt, Mo, W, Y, and Pd.

According to an aspect of the present invention, there is provided a method of manufacturing a CNT structure, the method comprising: coating a plurality of buffer particles having a predetermined size on a substrate; depositing a catalyst material with a predetermined thickness to cover surfaces of the buffer particles on the substrate; and growing CNTs from catalyst layers after forming a plurality of catalyst layers on surfaces of the buffer particles through annealing.

The forming of the catalyst layers and the growing of the CNTs can be performed by a CVD method.

The present invention provides a CNT structure having an optimum density and a method of manufacturing the CNT structure, and a FED device using the CNT structure and a method of manufacturing the FED device using the CNT structure.

According to an aspect of the present invention, there is provided a FED device comprising: a substrate; a cathode electrode formed on the substrate; an insulating layer that is formed on the substrate to cover the cathode electrode and has an emitter hole that exposes a portion of the cathode electrode; a gate electrode that is formed on the insulating layer; and a CNT emitter formed in the emitter hole and includes a plurality of buffer particles having a predetermined size coated on the cathode electrode, a plurality of catalyst layers formed on surfaces of the buffer particles by annealing a catalyst material deposited on the cathode electrode with a predetermined thickness to cover the buffer particles, and a plurality of CNTs grown from the catalyst layers.

According to an aspect of the present invention, there is provided a method of manufacturing a FED device comprising: forming an emitter hole that exposes a portion of a cathode electrode in an insulating layer after sequentially forming the cathode electrode, the insulating layer, and a gate electrode on a substrate; coating a plurality of buffer particles having a predetermined size on the cathode electrode exposed through the emitter hole; depositing a catalyst material on the cathode electrode with a predetermined thickness to cover surfaces of the buffer particles; and growing CNTs from catalyst layers after forming a plurality of catalyst layers on the surfaces of the buffer particles through an annealing.

### BRIEF DESCRIPTION OF THE DRAWINGS

The above and other features and advantages of the present invention will become more apparent by describing in detail exemplary embodiments thereof with reference to the attached drawings in which:
FIG. 1 is a SEM image of high density CNTs grown by a conventional CVD method;
FIG. 2 is a cross-sectional view illustrating a CNT structure according to an embodiment of the present invention;
FIG. 3A is a cross-sectional view illustrating high density CNTs grown by using small size buffer particles in the CNT structure according to the present invention;
FIG. 3B is a cross-sectional view illustrating low density CNTs grown by using large size buffer particles in the CNT structure according to the present invention;
FIGS. 4A through 4D are cross-sectional views illustrating a method of manufacturing a CNT structure according to an embodiment of the present invention;
FIG. 5 is a cross-sectional view illustrating a FED device according to the present invention;
FIGS. 6a through 6D are cross-sectional views illustrating a method of manufacturing a FED device according to another embodiment of the present invention; and
FIGS. 7A and 7B are SEM images taken the states of light emitting images of a FED device when 25nm and 50 nm of buffer particles are respectively used.

### DETAILED DESCRIPTION OF THE INVENTION

The present invention will now be described more fully with reference to the accompanying drawings in which embodiments of the present invention are shown. In the drawings, the thicknesses of layers and regions are exaggerated for clarity. Like reference numerals refer to the like elements throughout the drawings.

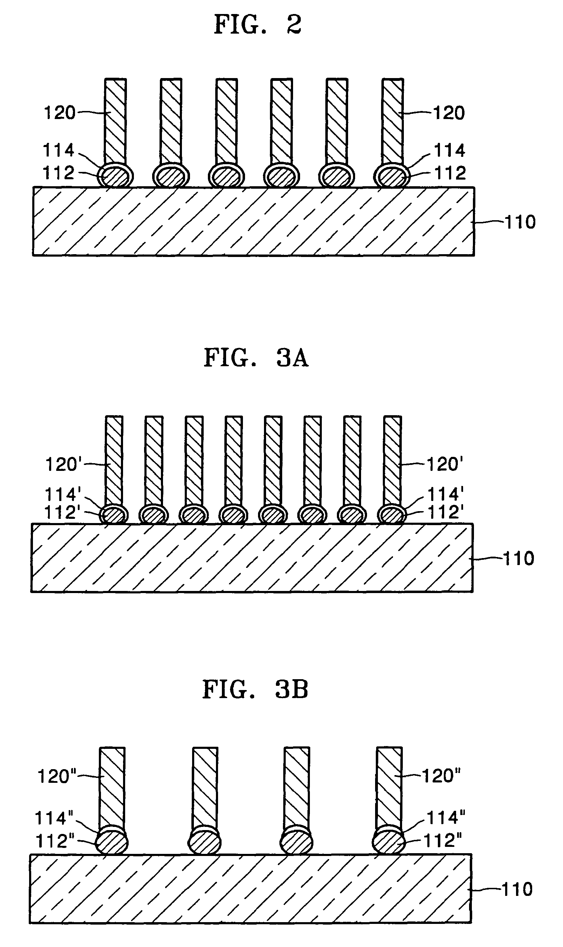

FIG. 2 is a cross-sectional view illustrating a CNT structure according to an embodiment of the present invention. Referring to FIG. 2, the CNT structure includes a substrate 110, a plurality of buffer particles 112 coated on the substrate 110, a plurality of catalyst layers 114 formed on surfaces of the buffer particles 112, and a plurality of CNTs 120 grown from the catalyst layers 114.

The buffer particles 112 can be formed in a spherical shape, an oval shape, a needle shape, or various protrusion shapes. Also, the buffer particles 112 can be formed of a conductor or a nonconductor. However, the buffer particles 112 preferably formed of a material that does not deform at a temperature at which the CNTs 120 are synthesized. More specifically, the buffer particles 112 can be formed of oxide of at least one selected from the group consisting of Si, Al, Ti, TiN, Cr, Ni, and Cu.

The catalyst layers 114 are formed on surfaces of the buffer particles 112 by annealing a catalyst material deposited to a predetermined thickness to cover the buffer particles 112 on the substrate 110 using a CVD method. The catalyst layers 114 can be formed of at least a material selected from the group consisting of Ni, Fe, Co, Pt, Mo, W, Y, and Pd.

The CNTs 120 are grown from the catalyst layers 114 by a CVD method. The CVD method can be a thermal CVD or a PECVD method.

The CNTs 120 grown from the catalyst layers 114 must have an appropriate density to increase field emission characteristics. FIGS. 3A and 3B show CNTs 120' and 120" grown from catalyst layers 114' and 114" when buffer particles 112' and 112" having a smaller size and a larger size than a required size are respectively used. Here, the catalyst layers 114' and 114" are grown using the same amount of a catalyst material on surfaces of the small buffer particles 112' and the larger buffer particles 112". Referring to FIG. 3A, when small buffer particles 112' are used, the density of the CNTs 120' grown from the catalyst layers 114' increases. When the density of the CNTs 120' is too high, each of the CNTs 120' not only shields the FED device but also increases a driving voltage. Referring to FIG. 3B, when large buffer particles 112" are used, the density of the CNTs 120" grown from the catalyst layers 114" decreases. When the density of the CNTs 120" is too low, there is a problem of flowing a high current in each CNTs 120". Therefore, the CNTs 120 must be grown to have an optimum density to increase the field emission characteristics of the CNTs 120.

In the present invention, if the size of the buffer particles 112 and the thickness of a catalyst material for forming catalyst layers 114 are controlled, the density of the CNTs 120 can be optimized. For this purpose, in the present embodiment, buffer particles 112 having sufficiently greater than the thickness of the catalyst material are used. More specifically, the buffer particles 112 preferably have a size more than five times greater than the thickness of the catalyst material. Here, the buffer particles 112 can have a size in a range of approximately 1-100 nm, and preferably 5-25 nm.

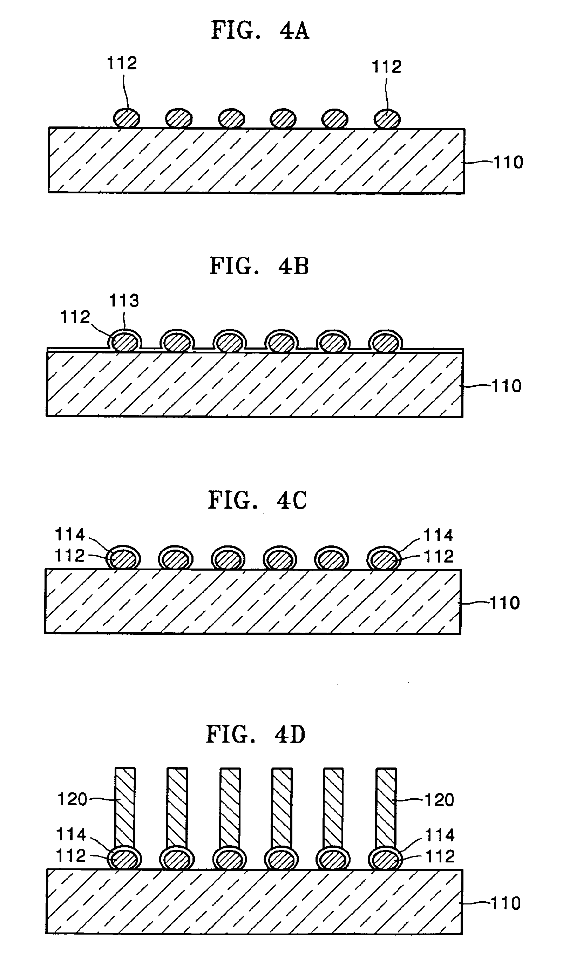

A method of manufacturing the CNT structure will now be described. FIGS. 4A through 4D are cross-sectional views illustrating a method of manufacturing a CNT structure according to an embodiment of the present invention.

Referring to FIG. 4A, a plurality of buffer particles 112 having a predetermined size are coated on a substrate 110. The method of coating the buffer particles 112 can be a spray method, a spin coating method, or a dipping method. The buffer particles 112 can be formed in a sphere, an oval shape, a needle shape, or various protrusion shapes. Also, the buffer particles 112 can be formed of a conductor or a nonconductor. However, the buffer particles 112 preferably formed of a material that does not deform at a temperature at which the CNTs 120 are synthesized. More specifically, the buffer particles 112 can be formed of oxide of at least one selected from the group consisting of Si, Al, Ti, TiN, Cr, Ni, and Cu. The buffer particles 112 preferably have a size more than five times greater than a thickness of a catalyst material 113 (see FIG. 4B) which will be described later. The buffer particles 112 can have a size in a range of approximately 1-100 nm, and preferably 5-25 nm.

Referring to FIG. 4B, a catalyst material 113 with a predetermined thickness is deposited on the substrate 110 to cover the buffer particles 112. The deposition of the catalyst material 13 can be performed by sputtering or electron beam evaporation. The catalyst material 113 can be at least a material selected from the group consisting of Ni, Fe, Co, Pt, Mo, W, Y, and Pd.

Referring to FIG. 4C, a plurality of catalyst layers 114 for forming CNTs 120 are formed on surfaces of the buffer particles 112. More specifically, when the catalyst material 113 deposited on surfaces of the substrate 110 and the buffer particles 112 are annealed, the catalyst material 113 on the substrate 110 migrates toward the surfaces of the buffer particles 112 due to the surface energy difference between the substrate 110 and the buffer particles 112. Accordingly, the catalyst layers 114 are formed on the surfaces of the buffer particles 112. Here, the annealing of the catalyst material 113 can be performed at the same time when performing a CVD method for growing the CNTs 120.

Referring to FIG. 4D, CNTs 120 are grown from the catalyst layers 114 formed on the surfaces of the buffer particles 112 by a CVD method. The CVD method can be a thermal CVD method or a PECVD method.

The CNTs 120 grown by the thermal CVD method have superior growth uniformity since the temperature on the entire specimen is uniform and also have a low turn on voltage since they have a smaller diameter than CNTs 120 grown by the PECVD method. On the other hand, the PECVD method has advantages of growing the CNTs 120 in a vertical direction to the substrate 110 and synthesizing the CNTs 120 at a lower temperature than that of the thermal CVD method.

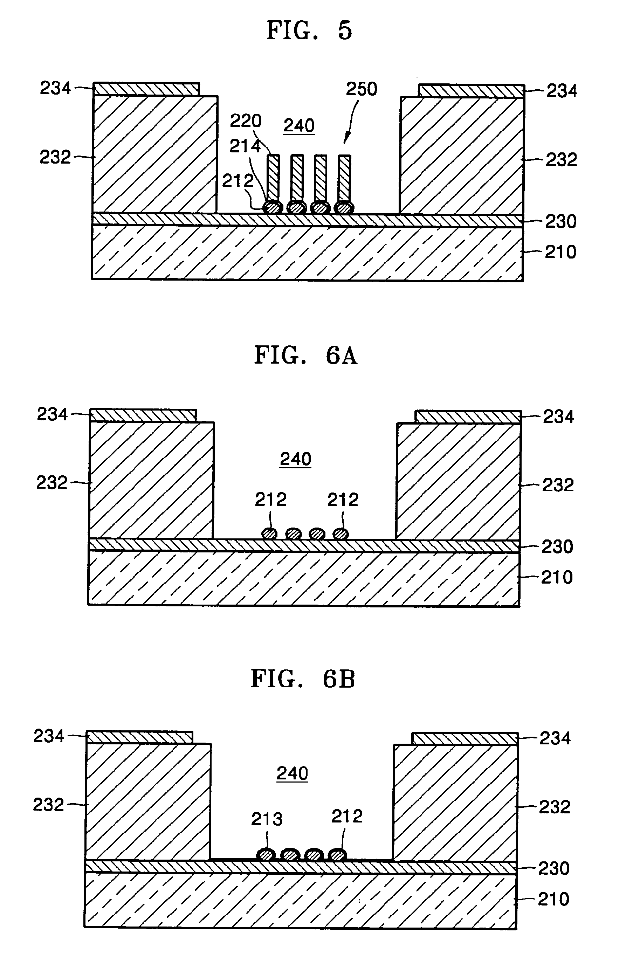

A FED device using the CNT structure will now be described. FIG. 5 is a cross-sectional view illustrating a FED device according to the present invention.

Referring to FIG. 5, a FED device according to another embodiment of the present invention includes a substrate 210, a cathode electrode 230, an insulating layer 232, and a gate electrode 234 sequentially stacked on the substrate 210, and a CNT emitter 250.

The substrate 210 can be formed of glass. The cathode electrode 230 patterned in a predetermined shape is deposited on a surface of the substrate 210. The cathode electrode 230 can be formed of a transparent conductive material, such as indium tin oxide (ITO). The insulating layer 232 that covers the cathode electrode 230 is formed on the substrate 210. An emitter hole 240 that exposes a portion of the cathode electrode 230 is formed in the insulating layer 232. The gate electrode 234 is deposited on an upper surface of the insulating layer 232. The gate electrode 234 can be formed of conductive metal, such as chrome Cr.

The CNT emitter 250 for emitting electrons by a voltage applied between the cathode electrode 230 and the gate electrode 234 is disposed within the emitter hole 240. The CNT emitter 250 includes a plurality of buffer particles 212 coated on the cathode electrode 230, a plurality of catalyst layers 214 formed on surfaces of the buffer particles 212, and a plurality of CNTs 220 grown from the catalyst layers 214.

The buffer particles 212 can be formed in a spherical shape, an oval shape, a needle shape, or various protrusion shapes. Also, as described above, the buffer particles 212 can be formed of oxide of at least one selected from the group consisting of Si, Al, Ti, TiN, Cr, Ni, and Cu. To increase the FED characteristics of the CNTs 220 by optimizing the density of the CNTs 220, the buffer particles 212 are preferably formed in a size more than five times greater than a thickness of a catalyst material for forming the catalyst layers 214. Here, the buffer particles 212 can have a size in a range of approximately 1-100 nm, and preferably 5-25 nm.

The catalyst layers 214 can be formed on surfaces of the buffer particles 212 through an annealing a catalyst material deposited on the cathode electrode 230 with a predetermined thickness to cover the buffer particles 212 using a CVD method. As described above, the catalyst layers 214 can be formed of at least a material selected from the group consisting of Ni, Fe, Co, Pt, Mo, W, Y, and Pd.

The CNTs 220 are grown from the catalyst layers 214 by a CVD method. The CVD method can include a thermal CVD method or a PECVD method.

A method of manufacturing the FED device will now be described. FIGS. 6a through 6D are cross-sectional views illustrating a method of manufacturing a FED device according to another embodiment of the present invention.

Referring to FIG. 6A, after sequentially forming a cathode electrode 230, an insulating layer 232, and a gate electrode 234 on a substrate 210, an emitter hole 240 that exposes a portion of the cathode electrode 230 is formed in the insulating layer 232. The substrate 210 can be formed of glass. The cathode electrode 230 can be formed of a transparent conductive material, such as ITO, and the gate electrode 234 can be formed of conductive metal, such as Cr.

More specifically, after depositing a transparent conductive material, such as ITO, to a predetermined thickness, the cathode electrode 230 is formed by patterning the transparent conductive material to a predetermined shape, such as a stripe shape. Next, an insulating layer 232 with a predetermined thickness to cover the cathode electrode 230 is formed on the substrate 210. After depositing a conductive metal, such as Cr, to a predetermined thickness on the insulating layer 232 by sputtering, a gate electrode 234 is formed by patterning the conductive metal to a predetermined shape. An emitter hole 240 is formed by etching the insulating layer 232 exposed through the gate electrode 234 until the cathode electrode 230 is exposed.

A plurality of buffer particles 212 having a predetermined size is coated on the cathode electrode 230 exposed through the emitter hole 240. Here, the coating of the buffer particles 212 can be performed by a spray method, a spin coating method, or a dipping method. The buffer particles 212 can be formed of oxide of at least one selected from the group consisting of Si, Al, Ti, TiN, Cr, Ni, and Cu. The buffer particles 212 preferably have a size more than five times greater than a thickness of a catalyst material 213 (see FIG. 6B) which will be described later. The buffer particles 212 can have a size in a range of approximately 1-100 nm, and preferably 5-25 nm.

Referring to FIG. 6B, a catalyst material 213 is deposited on the cathode electrode 230 with a predetermined thickness to cover the buffer particles 212. Here, the deposition of the catalyst material 213 can be performed by a sputtering method or an electron beam deposition method. The catalyst material 213 can be formed of at least a material selected from the group consisting of Ni, Fe, Co, Pt, Mo, W, Y, and Pd.

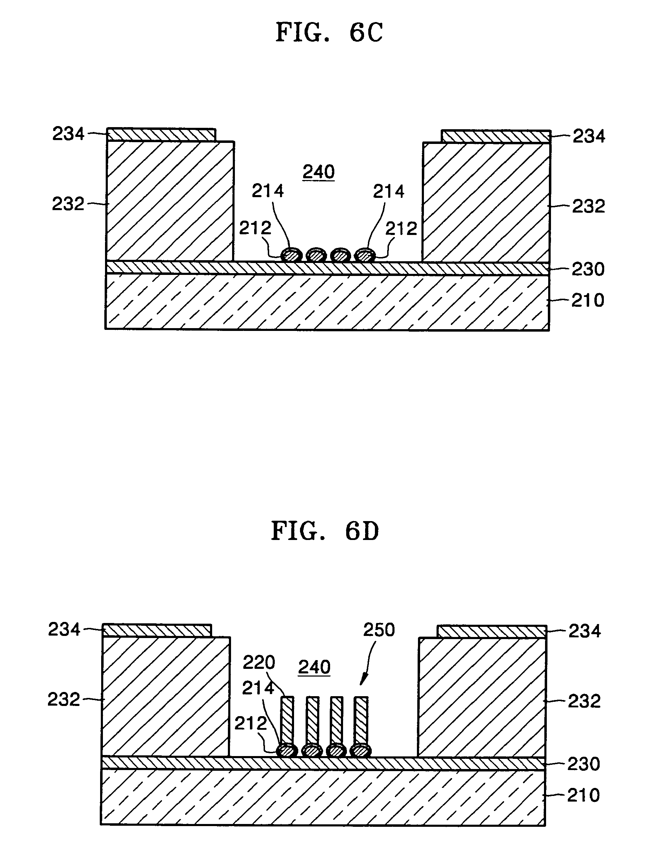

Referring to FIG. 6C, a plurality of catalyst layers 214 for growing CNTs 220 (see FIG. 6D) is formed on surfaces of the buffer particles 212. More specifically, when the catalyst material 213 deposited on surfaces of the cathode electrode 230 and the buffer particles 212 are annealed, the catalyst material 213 on the substrate 210 migrates toward the surfaces of the buffer particles 212 due to the surface energy difference between the cathode electrode 230 and the buffer particles 212. Accordingly, catalyst layers 214 are formed on the surfaces of the buffer particles 212. Here, the annealing of the catalyst material 213 can be performed at the same time when performing a CVD method for growing the CNTs 120.

Referring to FIG. 6D, the formation of CNT emitters 250 in the emitter hole 240 is completed when CNTs 120 are grown from the catalyst layers 214 formed on the surfaces of the buffer particles 212 by a CVD method. The CVD method can be a thermal CVD method or a PECVD method.

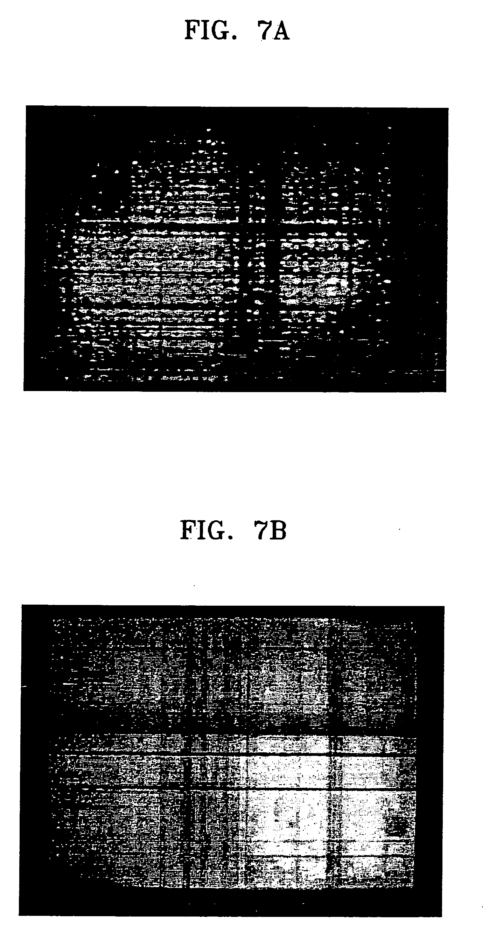

FIGS. 7A and 7B are SEM images of light emitting images of a FED device when 25 nm and 50 nm of buffer particles are respectively used. Here, Al₂O₃ particles are used as the buffer particles and an invar (an alloy of Fe, Ni, and Co) having a 2 nm thickness is used as the catalyst material. Referring to FIGS. 7A and 7B, the light emitting image of the FED device that uses the buffer particles of 50 nm size is improved more than in the FED device that uses the buffer particles of 25 nm size. This is because the amount of emitting current in the FED device that uses the buffer particles of 50 nm size is significantly greater than in the FED device that uses the buffer particles of 25 nm size.

As described above, the present invention has the following advantages.

First, the density and diameter of CNTs can be controlled by controlling the size of buffer particles and the thickness of a catalyst material. Therefore, an optimized density of CNTs can be obtained, thereby significantly increasing the field emission characteristics of a FED device.

Second, the manufacturing process can be simplified by directly coating the buffer particles having a predetermined size and the problem of oxidizing the catalyst layers can be prevented since the process is not performed under an oxidation atmosphere.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A carbon nanotube structure (CNT structure) comprising:
a substrate;
a plurality of buffer particles having a predetermined size coated on the substrate;
a plurality of catalyst layers formed on surfaces of the buffer particles by annealing a catalyst material deposited on the substrate to a predetermined thickness to cover the buffer particles; and
a plurality of CNTs grown from the catalyst layers.

2. The CNT structure of claim 1, wherein the buffer particles have a size more than five times greater than the thickness of the catalyst material.

3. The CNT structure of claim 2, wherein the buffer particles have a size in a range of 1-100 nm.

4. The CNT structure of claim 3, wherein the buffer particles have a size in a range of 5-25 nm.

5. The CNT structure of any preceding claim, wherein the buffer particles are formed of oxide of at least one selected from the group consisting of Si, Al, Ti, TiN, Cr, Ni, and Cu.

6. The CNT structure of any preceding claim, wherein the catalyst layers are formed of at least a material selected from the group consisting of Ni, Fe, Co, Pt, Mo, W, Y, and Pd.

7. A FED device comprising:
a carbon nanotube structure according to any of claims 1 to 6;
a cathode electrode formed on the substrate;
an insulating layer formed on the substrate to cover the cathode electrode and has an emitter hole that exposes a portion of the cathode electrode;
a gate electrode formed on the insulating layer;
wherein the plurality of buffer particles having a predetermined size are coated on the cathode electrode, and the buffer particles, the plurality of catalyst layers and the plurality of CNTs grown from the catalyst layers form an CNT emitter that is formed in the emitter hole.

8. A method of manufacturing a CNT structure comprising:
coating a plurality of buffer particles having a predetermined size on a substrate;
depositing a catalyst material with a predetermined thickness to cover surfaces of the buffer particles on the substrate; and
growing CNTs from catalyst layers after forming a plurality of catalyst layers on surfaces of the buffer particles through an annealing.

9. The method of claim 8, wherein the forming of the catalyst layers and the growing of the CNTs are performed by a CVD method.

10. The method of claim 9, wherein the CVD method is one of a thermal CVD method and a PECVD method.

11. The method of any of claims 8 to 10, wherein the buffer particles are coated by a spray method, a spin coating, or a dipping method.

12. The method of any of claims 8 to 11, wherein the buffer particles have a size more than five times greater than the thickness of the catalyst material.

13. The method of any of claims 8 to 12, wherein the buffer particles have a size in a range of 1-100 nm.

14. The method of any of claims 8 to 13, wherein the buffer particles have a size in a range of 5-25 nm.

15. The method of any of claims 8 to 14, wherein he buffer particles are formed of oxide of at least one selected from the group consisting of Si, Al, Ti, TiN, Cr, Ni, and Cu.

16. The method of any of claims 8 to 15, wherein the catalyst material is deposited by one of a sputtering method and an electron beam evaporation method.

17. The method of any of claims 8 to 16, wherein the catalyst material is formed of at least a material selected from the group consisting of Ni, Fe, Co, Pt, Mo, W, Y, and Pd.

18. The method of any of claims 8 to 17, wherein the catalyst layers are formed by the migration of the catalyst material on the substrate toward surfaces of the buffer particles due to the surface energy difference between the substrate and the buffer particles.

19. A CNT structure manufactured by the method of manufacturing the CNT structure described in claim 7.

20. A method of manufacturing a FED device comprising:
forming an emitter hole that exposes a portion of a cathode electrode in an insulating layer after sequentially forming the cathode electrode, the insulating layer, and a gate electrode on a substrate;
and manufacturing a CNT structure by a method according to any of claims 8 to 18, wherein the plurality of buffer particles having a predetermined size are coated on the cathode electrode exposed through the emitter hole.

21. A FED device manufactured by the method of manufacturing the FED device described in claim 20.
